# EUROPEAN PATENT SPECIFICATION

(11) **EP 3 185 693 B1**
(45) Date of publication and mention of the grant of the patent: **29.04.2020**
(21) Application number: 14758128.4
(22) Date of filing: 29.08.2014
(51) Int. Cl.: A23G 9/22, A23G 9/12, A23G 9/28

(54) **REFRIGERATION APPLIANCE HAVING AN ICE CREAM MAKING APPARATUS AND METHOD OF CONTROLLING THE SAME**
KÄLTEVORRICHTUNG MIT SPEISEEISMASCHINE UND VERFAHREN ZUR STEUERUNG DAVON
APPAREIL DE RÉFRIGÉRATION COMPRENANT UN APPAREIL DE FABRICATION DE CRÈME GLACÉE ET SON PROCÉDÉ DE COMMANDE

(43) Date of publication of application: 05.07.2017
(73) Proprietor: Arçelik Anonim Sirketi, 34445 Istanbul (TR)
(72) Inventor: AKINCI, Irem, 34950 Istanbul (TR); AKAN, Samet, 34950 Istanbul (TR); OZSACMACI, Yigit, 34950 Istanbul (TR); TIRASCI, Ayse Nur, 34950 Istanbul (TR)
(86) International application number: PCT/EP2014/068370
(87) International publication number: WO 2016/029960

(56) References cited:
- WO-A1-2009/059405
- JP-A- 2008 142 017
- US-A- 3 977 656
- US-A1- 2011 108 569
- US-A1- 2013 333 404

## Description

The present invention relates to a refrigeration appliance, in particular a domestic refrigerator which has an ice cream making apparatus. The present invention also relates to an improved method of controlling the ice cream making apparatus of the refrigeration appliance.

Conventional domestic refrigerators have been endowed with various functionalities in order to improve their user convenience. Conventional domestic refrigerators which are provided with a conventional built-in ice cream making apparatus for supplying the user with ice cream are commonly known. A conventional built-in ice cream making apparatus typically comprises a container for holding ice cream to be agitated, a stirrer for agitating the ice cream inside the container, and a motor for driving the stirrer. The container is usually arranged inside a freezer compartment of the conventional domestic refrigerator.

In a conventional method of making ice cream, a timer is set to a prescribed duration, and the mixture in the container is constantly stirred while being cooled by the air blown into the freezer compartment. At the end of the prescribed duration the timer stops the motor to terminate the stirring operation.
US 3 977 656 discloses a domestic electric ice-cream freezer for preparing sherbets, ice creams, parfaits and the like without any need for supervision by the user. Setting of these culinary preparations is initiated by placing the ice-cream freezer either in the evaporator compartment of a refrigerator or in a cold-storage unit or in a deep-freeze unit.

JP 2008-142017 (A) discloses a conventional domestic refrigerator which has an ice cream maker. The ice cream maker is arranged inside the freezer compartment. The ice cream maker has a container for holding the ice cream, stirring blades for stirring the ice cream inside the container, a motor for driving the stirring blades, a control unit for controlling the motor, and an operation panel for starting an ice cream production by pressing a start button.

A drawback of this conventional domestic refrigerator is that the heat generated by the motor of the ice cream maker raises the temperature of the cool air inside the freezer compartment. The rise of the temperature badly influences the quality of the ice cream production. Thus, the consumer satisfaction may easily decrease.

An objective of the present invention is to provide a refrigeration appliance which has an ice cream making apparatus and a method of controlling the same which overcomes the aforementioned drawbacks of the prior art in a cost effective way and which enables to produce ice cream without compromising its quality.

This objective has been achieved by the control method as defined in claim 1, and the refrigeration appliance as defined in claim 10. Further achievements have been attained by the subject-matters respectively defined in the dependent claims.

In the refrigeration appliance of the present invention the control unit has a yoghurt ice cream mode and/or a fruit ice cream mode. Each mode is selectable by the user via a user-interface.

In the method for controlling the refrigeration appliance according to the present invention, a desired one of the yoghurt/fruit ice cream mode is initiated in accordance with a user selection which is input via the user interface. Once the desired one of the yoghurt/fruit ice cream mode is initiated, the motor of the ice cream making apparatus is controlled in accordance with an ON/OFF regime prescribed by the initiated mode. In the ON/OFF regime, the motor is successively switched ON and OFF for a prescribed plural number of cycles in order to complete the process of yoghurt/fruit ice cream production.

In the yoghurt ice cream mode, the ice cream to be agitated includes yoghurt as an ingredient. In the fruit ice cream mode the ice cream to be agitated includes fruit as an ingredient.

In an embodiment, the prescribed plural number of cycles, a prescribed duration of each cycle, a prescribed ON duration and a prescribed OFF duration of the motor within each cycle, a prescribed speed of the motor during the prescribed ON duration in each cycle are based on the initiated mode.

In another embodiment, the cycles are monitored by the control unit. The user is audibly and/or visually informed for a prescribed first duration T1, for example, for about 1 minute that the process of yoghurt/fruit ice cream production is completed when the prescribed plural numbers of cycles have elapsed.

In another embodiment, the opening/closing of the door is monitored by means of a detecting unit. The user is audibly and/or visually reinformed for a prescribed second duration T2, for example for about 1 minute that the process of yoghurt/fruit ice cream production is completed when the user has not opened the door within a prescribed third duration, for example within the last 1 hour after the process of yoghurt/fruit ice cream production has been completed.

In another embodiment, the container of the ice making apparatus is cooled by the freezer fan of the freezer compartment during the process of yoghurt/fruit ice cream production.

By virtue of the ON/OFF regime applied in the control method of present invention, the motor is prevented from excessively heating up, and its operating temperature is kept below a desired critical level. In particular, during the OFF duration of the motor, the rise of temperature of the cool air inside the freezer compartment is suppressed and, thereby a cooling performance of the yoghurt/fruit ice cream by the cool air is effectively improved. In addition, by virtue of the ON/OFF regime, the yoghurt/fruit ice cream is maintained at target quality during the process of the yoghurt/fruit ice cream production. In particular during the ON duration of the motor, due to the effect of the stirring, the yoghurt/fruit ice cream is rendered voluminous and the formation of frost in the yoghurt/fruit ice cream is prevented. In particular with the OFF duration of the motor also an excessive stirring is prevented. Thus, by the method of the present invention a quality of the yoghurt/fruit ice cream can be optimized and the adverse effects of the radiant heat emanated from the motor on the yoghurt/fruit ice cream can be practically eliminated. With the present invention the user is enabled to select a desired one of the yoghurt/fruit ice cream mode. Also with the present invention the user is informed when the yoghurt/fruit ice cream production is completed or when the yoghurt/fruit ice cream is unintentionally left in the freezer compartment for longer periods. Thereby, a consumer satisfaction can be further increased.

Additional advantages of the control method according to the present invention and the refrigeration appliance according to the present invention will become apparent with the detailed description of the embodiments with reference to the accompanying drawings in which:
Figure 1 - is a schematic partial side view of a refrigeration appliance which has an ice cream making apparatus according to an embodiment of the present invention;
Figure 2 - is a flow chart showing the steps of a method for controlling the refrigeration appliance of Fig. 1 according to an embodiment of the present invention.

The reference signs appearing on the drawings relate to the following technical features.
1. Ice cream making apparatus
2. Refrigeration appliance
3. Container
4. Stirrer
5. Motor
5a. Transmission unit
6. Freezer compartment
7. Door
7a. Casing
8. Fresh food compartment
N: Prescribed plural number of cycles
T_cycle: Prescribed duration of each cycle
T_on: Prescribed ON duration of the motor (5) in each cycle
T_off: Prescribed OFF duration of the motor (5) in each cycle
V: Prescribed speed of the motor (5)
T1: Prescribed first duration
T2: Prescribed second duration
T3: Prescribed third duration

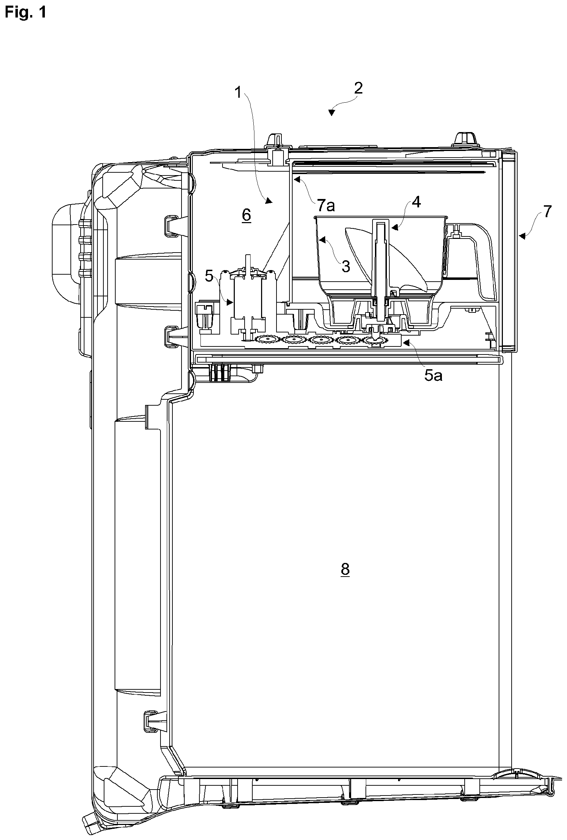

The refrigeration appliance (2) has an ice cream making apparatus (1) which comprises a container (3) for holding ice cream to be agitated, a stirrer (4) for agitating the ice cream inside the container (3) and a motor (5) for driving the stirrer (4) (Fig. 1). The refrigeration appliance (2) further comprises a freezer compartment (6) which accommodates the ice cream making apparatus (1), a door (7) for accessing the container (4) of the ice cream making apparatus (1), a control unit (not shown) for controlling the motor (5) of the ice cream making apparatus (1) and a user-interface (not shown) for receiving a user input (Fig. 1).

In the refrigeration appliance (2) of the present invention, the control unit has a yoghurt ice cream mode and/or a fruit ice cream mode. Each mode is selectable by the user via the user-interface.

The present invention provides a method for controlling the ice cream making apparatus (1) of the refrigeration appliance (2). In the method according to the present invention, in an initiating step (S1) the yoghurt ice cream mode or the fruit ice cream mode is initiated in accordance with a user selection which is input via the user interface. In a controlling step (S2), the motor (5) of the ice making apparatus is controlled in accordance with an ON/OFF regime prescribed by the mode initiated in the initiating step (S1). In the ON/OFF regime the motor (5) is successively switched ON and OFF for a prescribed plural number N of cycles to complete the process of yoghurt/fruit ice cream production.

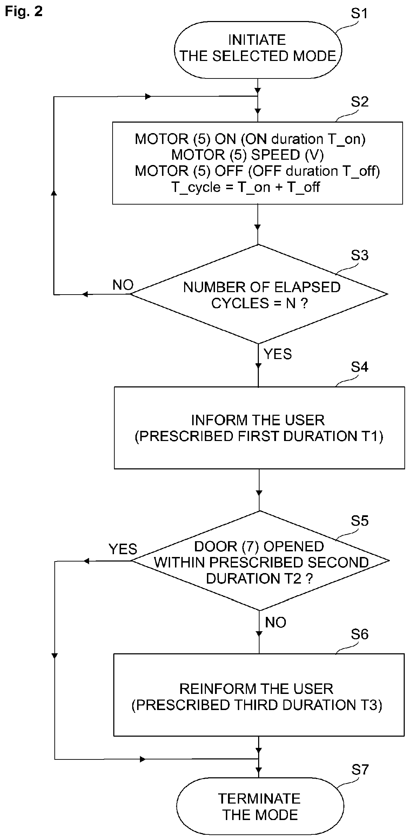

In an embodiment, in the controlling step (S1), the prescribed plural number N of cycles, a prescribed duration T_cycle of each cycle, a prescribed ON duration T_on of the motor (5) and a prescribed OFF duration T_off of the motor (5) within each cycle, a prescribed speed V of the motor (5) during the prescribed ON duration T_on in each cycle are based on the mode which is initiated in the initiating step (S1) (Fig. 2).

In the yoghurt ice cream mode, the ice cream to be agitated includes, among others, yoghurt as an ingredient. In the fruit ice cream mode, the ice cream to be agitated includes, among others, fruit as an ingredient. The yoghurt ice cream mode and the fruit ice cream mode also differ from each other, for example through a consistency (creaminess) of the ice cream to be produced.

In another embodiment, in a first determining step (S3) it is determined whether the motor (5) has been turned ON and OFF for the prescribed plural number N of cycles (Fig. 2). In this embodiment, in an informing step (S4) the user is audibly and/or visually informed via the user-interface that the process of yoghurt/fruit ice cream production is completed if the determination result in the first determining step (S3) is affirmative (Fig. 2).

In another embodiment, in the informing step (S4) the user is informed for a prescribed first duration T1 that the process of yoghurt/fruit ice cream production is completed.

In another embodiment, in the informing step (S4) the prescribed first duration T1 is about one minute.

In another embodiment, the refrigeration appliance (2) further comprises a detecting unit (not shown) for detecting an opening/closing of the door (7) (Fig. 1). In this embodiment, in a second determining step (S5), it is determined whether the door (7) has been opened within a prescribed second duration T2 which commences immediately after an elapse of the prescribed plural number of cycles (Fig. 2). In this embodiment, in a reinforming step (S6) the user is reinformed that the process of yoghurt/fruit ice cream production is completed if the determination result in the second determining step (S5) is negative. In this embodiment, in a terminating step (S7), the ice cream mode is terminated if the determination in the second determining step (S5) is affirmative or if the user has been reinformed in the reinforming step (S6) (Fig. 2).

In another embodiment, in the second determining step (S5) said prescribed second duration T2 is about one hour.

In another embodiment, in the reinforming step (S6) the user is reinformed for a prescribed third duration T3 that the process of yoghurt/fruit ice cream production is completed.

In another embodiment, in the reinforming step (S6) the prescribed third duration T3 is about one minute.

In the refrigeration appliance (2) of the present invention, the control unit is programmed to execute the method steps of the present invention.

In another embodiment, the refrigeration appliance (2) of the present invention is provided in form of a domestic refrigerator which has a fresh food compartment (8) in addition to the freezer compartment (6) (Fig. 1).

In another embodiment, the ice cream making apparatus (1) comprises a casing (7a) which is installed into the freezer compartment (6). The container (3) can be removably attached to a seat inside the casing (7a).

In another embodiment, the motor (5) is connected with the stirrer (4) by means of a transmission unit (5a) for transmitting the rotary motion generated by the motor (5) to the stirrer (4) (Fig. 1).

In another embodiment, the control unit has a fruit ice cream mode for which the prescribed plural number N of cycles is 2, a prescribed duration T_cycle of each cycle is 45 minutes, a prescribed ON duration T_on of the motor (5) and a prescribed OFF duration T_off of the motor (5) within each cycle are 40 minutes and 5 minutes respectively. In the fruit ice cream mode, the ice cream to be agitated includes fruit. However, during the agitation, the fruit releases its water content which, in turn, promotes the formation of frost in fruit the ice cream. In this embodiment, the prescribed ON duration T_on of the motor (5) is set to a relatively long duration, in particular to 40 minutes to render the fruit ice cream voluminous and to prevent the formation of frost.

In another embodiment, the control unit has a yoghurt ice cream mode for which the prescribed plural number N of cycles is 2, a prescribed duration T_cycle of the first cycle is 45 minutes, a prescribed ON duration T_on of the motor (5) and a prescribed OFF duration T_off of the motor (5) within the first cycle are 40 minutes and 5 minutes respectively, and a prescribed duration T_cycle of the second cycle is 15 minutes, a prescribed ON duration T_on of the motor (5) and a prescribed OFF duration T_off of the motor (5) within the second cycle are 15 minutes and zero minutes respectively. In the yoghurt ice cream mode, the ice cream to be agitated includes yoghurt. However, during the agitation, the yoghurt releases its water content which, in turn, promotes the formation of frost in the ice cream. In this embodiment, the prescribed duration T_cycle of the first cycle and the prescribed duration T_cycle of the second cycle are different for the following reasons: In this embodiment, the prescribed ON duration T_on of the motor (5) within the first cycle is set to a relatively long duration, in particular to 40 minutes to render the yoghurt ice cream voluminous and to prevent the formation of frost. In this embodiment, the prescribed ON duration T_on of the motor (5) within the second cycle is set to a relatively short duration, in particular to 15 minutes since the yoghurt already lends the ice cream to be agitated a considerable level of consistency. Thus, in case of excessive agitation, there is a risk that the yoghurt ice cream overflows.

In another embodiment, the freezer compartment (6) has a fan (not shown) which is arranged to blow cool air towards the container (3) of the ice cream making apparatus (1) (Fig. 1). The freezer fan is controlled by the control unit.

The present invention also provides a computer readable program which comprises codes for causing a refrigeration appliance (2) to execute the method steps of the present invention.

The present invention also provides a computer readable recording medium which stores the computer readable program of the present invention.

With the control method of the present invention, particularly by virtue of the ON/OFF regime, the adverse effects of excessive heat production on the ice cream have been eliminated or reduced as much as possible, and thereby the quality of the produced yoghurt/fruit ice cream has been improved. With the control method of the present invention, particularly by virtue of the ON/OFF regime, the adverse effects of excessive heat production on the refrigeration circuit and the stirring mechanism have been eliminated or reduced as much as possible, and thereby also the energy efficiency of the refrigeration appliance (2) during the ice cream production has been improved. Thus, with the present invention the consumer satisfaction can be increased.

## Claims

1. A method for controlling an ice cream making apparatus (1) of a refrigeration appliance (2), in particular a domestic refrigerator, wherein the ice cream making apparatus (1) comprising a container (3) for holding the ice cream to be agitated, a stirrer (4) for agitating the ice cream inside the container (3) and a motor (5) for driving the stirrer (4), and wherein the refrigeration appliance (2) further comprising a freezer compartment (6) which accommodates the ice cream making apparatus (1), a door (7) for accessing the container (3), a control unit for controlling the motor (5) and a user-interface for receiving a user input, wherein the control unit has a yoghurt ice cream mode and/or a fruit ice cream mode, wherein each mode is selectable by the user via the user-interface,
said method being **characterized by** comprising:
- a step (S1) of initiating the yoghurt ice cream mode or the fruit ice cream mode in accordance with the user selection which is input via the user interface,
- a step (S2) of controlling the motor (5) in accordance with an ON/OFF regime which is prescribed by the mode initiated in the initiating step (S1), wherein in the ON/OFF regime the motor (5) is successively switched ON and OFF for a prescribed plural number N of cycles to complete the process of yoghurt/fruit ice cream production.

2. The method according to claim 1, **characterized in that** in the controlling step (S1) the prescribed plural number N of cycles, a prescribed duration T_cycle of each cycle, a prescribed ON duration T_on of the motor (5) and a prescribed OFF duration T_off of the motor (5) within each cycle, a prescribed speed V of the motor (5) during the ON duration T_on in each cycle are based on the mode initiated in the initiating step (S1).

3. The method according to claim 1 or 2, **characterized by** further comprising:
- a first step (S3) of determining whether the motor (5) has been turned ON and OFF for the prescribed plural number N of cycles and
- a step (S4) of informing the user audibly and/or visually via the user-interface that the process of yoghurt/fruit ice cream production is completed if the determination result in the first determining step (S3) is affirmative.

4. The method according to claim 3, **characterized in that** in the informing step (S4) the user is informed for a prescribed first duration T1 that the process of yoghurt/fruit ice cream production is completed.

5. The method according to claim 4, **characterized in that** in the informing step (S4) the prescribed first duration T1 is about one minute.

6. The method according to any one of claims 2 to 5, wherein the refrigeration appliance (2) further comprises a detecting unit for detecting an opening/closing of the door (7),
the method being **characterized by** further comprising:
- a second step (S5) of determining whether the door (7) has been opened within a prescribed second duration T2 which commences immediately after an elapse of the prescribed plural number N of cycles,
- a step (S6) of reinforming the user that the process of yoghurt/fruit ice cream production is completed if the determination result in the second determining step (S5) is negative and
- a step (S7) of terminating the mode if the determination result in the second determining step (S5) is affirmative or if the user has been reinformed in the reinforming step (S6).

7. The method according to claim 6, **characterized in that** in the second determining step (S5) said prescribed second duration T2 is about one hour.

8. The method according to claim 6 or 7, **characterized in that** in the reinforming step (S6) the user is reinformed for a prescribed third duration T3 that the process of yoghurt /fruit ice cream production is completed.

9. The method according to claim 8, **characterized in that** in the reinforming step (S6) the prescribed third duration T3 is about one minute.

10. A refrigeration appliance (2), in particular a domestic refrigerator, comprising
- an ice cream making apparatus (1) which comprises: a container (3) for holding ice cream to be agitated, a stirrer (4) for agitating the ice cream inside the container (3) and a motor (5) for driving the stirrer (4),
- a freezer compartment (6) which accommodates the ice cream making apparatus (1),
- a door (7) for accessing the container (4),
- a control unit for controlling the motor (5) and
- a user-interface for receiving a user input,
**characterized in that**
the control unit has a yoghurt ice cream mode and/or a fruit ice cream mode, each mode being selectable by the user via the user-interface, and the control unit is programmed to execute the method steps as defined in any one of claims 1 to 9.

11. The refrigeration appliance (2) according to claim 10, **characterized in that** a detecting unit for detecting an opening/closing of the door (7).

12. The refrigeration appliance (2) according to claim 10 or 11, **characterized in that** for the fruit ice cream mode the prescribed plural number N of cycles is 2, a prescribed duration T_cycle of each cycle is about 45 minutes, a prescribed ON duration T_on of the motor (5) and a prescribed OFF duration T_off of the motor (5) within each cycle are about 40 minutes and about 5 minutes respectively and for the yoghurt ice cream mode the prescribed plural number N of cycles is 2, a prescribed duration T_cycle of the first cycle is about 45 minutes, a prescribed ON duration T_on of the motor (5) and a prescribed OFF duration T_off of the motor (5) within the first cycle are about 40 minutes and about 5 minutes respectively, and a prescribed duration T_cycle of the second cycle is about 15 minutes, a prescribed ON duration T_on of the motor (5) and a prescribed OFF duration T_off of the motor (5) within the second cycle are about 15 minutes and zero minutes respectively.

13. The refrigeration appliance (2) according to any one of claims 10 to 12, **characterized in that** the freezer compartment (6) has a fan which is configured to blow cool air towards the container (3) of the ice cream making apparatus (1).

14. A computer readable program comprising codes for causing a refrigeration appliance (2) to execute the method steps defined in any one of claims 1 to 9.

15. A computer readable recording medium which stores the computer readable program as defined in claim 14.

## Patentansprüche

1. Verfahren zur Steuerung einer Eiscremeherstellungsvorrichtung (1) eines Kühlgeräts (2), insbesondere eines Haushaltskühlschranks, wobei die Eiscremeherstellungsvorrichtung (1) einen Behälter (3) zum Halten des zu rührenden Eises, einen Rührer (4) zum Rühren des Eises im Behälter (3) und einen Motor (5) zum Antreiben des Rührers (4) umfasst, wobei das Kühlgerät (2) des Weiteren einen Gefrierfach (6) umfasst, in dessen die Eismaschine (1) zugeordnet ist, eine Tür (7) für den Zugang zum Behälter (3), eine Steuereinheit zum Steuern des Motors (5) und eine Benutzerschnittstelle zum Empfangen einer Benutzereingabe; wobei die Steuereinheit einen Joghurt-Eis Modus und / oder einen Fruchteis-Modus aufweist und jeder Modus vom Benutzer über die Benutzeroberfläche ausgewählt werden kann;
das Verfahren **ist gekennzeichnet durch:**
- einen Schritt (S1) zum Starten des Joghurt-Eis-Modus oder des Fruchteis-Modus anhand der Benutzerauswahl, die über die Benutzeroberfläche eingegeben wird;
- einen Schritt (S2) zum Steuern des Motors (5) gemäß einem EIN / AUS-System, das durch den im Verfahrensschritt (S1) eingeleiteten Modus vorgegeben ist, wobei im EIN / AUS-System des Motors (5) nacheinander für eine vorgeschriebene Anzahl von N Zyklen ein- und ausgeschaltet wird, um den Prozess der Herstellung von Joghurt / Fruchteis abzuschließen.

2. Das Verfahren nach Anspruch 1 **ist dadurch gekennzeichnet, dass** im Verfahrensschritt (S1) die vorgeschriebene Mehrzahl N von Zyklen, eine vorgeschriebene Dauer T_Zyklus aufweist und wobei jedes Zyklus, die vorgeschriebene Mehrzahl N von Zyklen, eine vorgeschriebene Dauer T_Zyklus jedes Zyklus und eine vorgeschriebene Drehzahl V des Motors (5) während der EIN-Dauer T_on in jedem Zyklus auf dem im Auslöseschritt (S1) eingeleiteten Modus basiert.

3. Das Verfahren nach Anspruch 1 oder 2 ist darüber hinaus **gekennzeichnet durch:**
- einen ersten Schritt (S3), der bestimmt, ob der Motor (5) für die vorgeschriebene Mehrzahl N von Zyklen ein- und ausgeschaltet wurde;
- einen Schritt (S4), der den Benutzer akustisch und / oder visuell über die Benutzeroberfläche darüber zu informiert, dass der Prozess der Herstellung von Joghurt / Fruchteis abgeschlossen ist, wenn das Bestimmungsergebnis im ersten Bestimmungsschritt (S3) positiv ist.

4. Das Verfahren nach Anspruch 3 **ist dadurch gekennzeichnet, dass** im Verfahrensschritt (S4) der Benutzer für eine vorgeschriebene erste Dauer T1 informiert wird, dass der Prozess der Joghurt / Fruchteis-Herstellung abgeschlossen ist.

5. Das Verfahren nach Anspruch 4 **ist dadurch gekennzeichnet, dass** im Verfahrensschritt (S4) die vorgeschriebene erste Dauer T1 etwa eine Minute beträgt.

6. Das Verfahren nach einem der Ansprüche 2 bis 5, wobei das Kühlgerät (2) eine Erfassungseinheit zum Erfassen eines Öffnens / Schließens der Tür (7) umfasst; **ist dadurch gekennzeichnet,**
- **dass** ein zweiter Schritt (S5) bestimmt, ob die Tür (7) innerhalb einer vorgeschriebenen zweiten Dauer T2 geöffnet wurde, die unmittelbar nach Ablauf der vorgeschriebenen Pluralzahl N von Zyklen beginnt;
- **dass** ein Schritt (S6) die Neuformulierung des Benutzers tätigt, dass der Prozess der Herstellung von Joghurt / Fruchteis abgeschlossen ist, wenn das Bestimmungsergebnis im zweiten Bestimmungsschritt (S5) negativ ist und
- durch einen Schritt (S7) zum Beenden des Modus, wenn das Bestimmungsergebnis im zweiten Bestimmungsschritt (S5) positiv ist oder wenn der Benutzer im Neuformierungsschritt (S6) neu formiert wurde.

7. Das Verfahren nach Anspruch 6 **ist dadurch gekennzeichnet, dass** im zweiten Bestimmungsschritt (S5) die vorgeschriebene zweite Dauer T2 etwa eine Stunde beträgt.

8. Das Verfahren nach Anspruch 6 oder 7 **ist dadurch gekennzeichnet, dass** der Benutzer im Umformungsschritt (S6) für eine vorgeschriebene dritte Dauer T3 umformiert wird, damit der Prozess der Herstellung von Joghurt / Fruchteis abgeschlossen ist.

9. Das Verfahren nach Anspruch 8 **ist dadurch gekennzeichnet, dass im** Umformungsschritt (S6) die vorgeschriebene dritte Dauer T3 etwa eine Minute beträgt.

10. Ein Kühlgerät (2), insbesondere ein Haushaltskühlschrank, umfasst:
- eine Eiscremeherstellungsvorrichtung (1), die umfasst: einen Behälter (3) zum Halten des zu rührenden Eises, einen Rührer (4) zum Rühren des Eises innerhalb des Behälters (3) und einen Motor (5) zum Antreiben des Rührers (4),
- ein Gefrierfach (6), worin die Eismaschine (1) untergebracht ist,
- eine Tür (7) für den Zugang zum Behälter (4),
- eine Steuereinheit zur Steuerung des Motors (5) und
- eine Benutzeroberfläche zum Empfangen einer Benutzereingabe, **gekennzeichnet ist es durch**
die Steuereinheit verfügt über einen Joghurt-Eis Modus und / oder einen Fruchteis-Modus, wobei jeder Modus vom Benutzer aus über die Benutzeroberfläche ausgewählt werden kann, wobei die Steuereinheit so programmiert ist, dass sie die in einem der Ansprüche 1 bis 9 definierten Verfahrensschritte ausführt.

11. Das Kühlgerät (2), wie in Anspruch 10 aufgeführt, **ist dadurch gekennzeichnet, dass** es eine Erfassungseinheit zum Erfassen eines Öffnens / Schließens der Tür (7) aufweist.

12. Das Kühlgerät (2), wie in Anspruch 10 oder 11 aufgeführt, **ist dadurch gekennzeichnet, dass** für den Fruchteismodus die vorgeschriebene Mehrzahl N von Zyklen 2, eine vorgeschriebene Dauer T_Zyklus jedes Zyklus etwa 45 Minuten, eine vorgeschriebene EIN-Dauer T_on des Motors (5) und eine vorgeschriebene AUS-Dauer T_off des Motor (5) innerhalb jedes Zyklus sind ungefähr 40 Minuten bzw. ungefähr 5 Minuten beträgt; wobei, für den Joghurteismodus die vorgeschriebene Mehrzahl N von Zyklen 2, eine vorgeschriebene Dauer T_Zyklus des ersten Zyklus etwa 45 Minuten, eine vorgeschriebene EIN-Dauer T_on des Motors (5) und eine vorgeschriebene AUS-Dauer T_off des Motors (5) innerhalb des ersten Zyklus ungefähr 40 Minuten bzw. ungefähr 5 Minuten beträgt, eine vorgeschriebene Dauer T_Zyklus des zweiten Zyklus ungefähr 15 Minuten, eine vorgeschriebene EIN-Dauer T_on des Motors (5) und eine vorgeschriebene AUS-Dauer T_off des Motors (5) innerhalb des zweiten Zyklus sind ungefähr 15 Minuten bzw. Null Minuten beträgt.

13. Das Kühlgerät (2), wie in Anspruch 10 bis 12 aufgeführt, **ist dadurch gekennzeichnet, dass** das Gefrierfach (6) einen Ventilator aufweist, der konfiguriert ist, um kühle Luft in Richtung des Behälters (3) der Eiscremeherstellungsvorrichtung (1) zu blasen.

14. Ein computerlesbares Programm umfasst Codes zum Ausführen des Kühlgerätes (2) gemäß der in einem der Ansprüche 1 bis 9 definierten Verfahrensschritte.

15. Ein computerlesbares Aufzeichnungsmedium speichert das computerlesbare Programm gemäß Anspruch 14.

## Revendications

1. Un procédé pour commander un appareil de fabrication de crème glacée (1) d'un appareil de réfrigération (2), en particulier un réfrigérateur domestique, dans lequel l'appareil de fabrication de crème glacée (1) comprend un récipient (3) pour contenir la crème glacée à agiter, un agitateur (4) pour agiter la crème glacée à l'intérieur du récipient (3) et un moteur (5) pour entraîner l'agitateur (4), et dans lequel l'appareil de réfrigération (2) comprend en outre un compartiment de congélation (6) qui renferme l'appareil de fabrication de crème glacée (1), une porte (7) pour accéder au conteneur (3), une unité de commande pour commander le moteur (5) et une interface utilisateur pour recevoir une entrée de l'utilisateur, dans lequel l'unité de commande a un mode crème glacée au yaourt et/ou un mode crème glacée aux fruits, dans lequel chaque mode peut être sélectionné par l'utilisateur via l'interface utilisateur,
ladite méthode étant **caractérisée par le fait qu'**elle comprend :
- une étape (S1) consistant à lancer le mode crème glacée au yaourt ou le mode crème glacée aux fruits en fonction de la sélection de l'utilisateur qui est saisie via l'interface utilisateur,
- une étape (S2) de commande du moteur (5) conformément à un régime de MARCHE/ARRET qui est prescrit par le mode initié dans l'étape d'initiation (S1), dans lequel, dans le régime de MARCHE/ARRET, le moteur (5) est successivement mis en marche et arrêté pendant un nombre N prescrit de cycles pour achever le processus de production de yaourt/crème glacée aux fruits.

2. Le procédé selon la revendication 1, **est caractérisé en ce que** dans l'étape de commande (S1), le nombre N de cycles multiples prescrit, une durée T prescrite de chaque cycle, une durée T Marche prescrite du moteur (5) et une durée T Arrêt prescrite du moteur (5) à l'intérieur de chaque cycle, une vitesse V prescrite du moteur (5) pendant la durée T Marche de chaque cycle sont basés sur le mode initié dans l'étape d'initiation (S1).

3. La méthode selon la déclaration 1 ou 2, **est caractérisée en ce qu'**elle comprend en outre
- une première étape (S3) consistant à déterminer si le moteur (5) a été mis en MARCHE et ARRÊTE pour le nombre pluriel prescrit N de cycles et
- une étape (S4) consistant à informer l'utilisateur de manière sonore et/ou visuelle via l'interface utilisateur que le processus de production du yaourt ou de la glace aux fruits est terminé si le résultat de la première étape déterminante (S3) est positif.

4. La méthode selon la déclaration 3, **est caractérisée en ce que** lors de l'étape d'information (S4), l'utilisateur est informé pendant une première durée prescrite T1 que le processus de production de yaourt / crème glacée aux fruits est terminé.

5. La méthode selon la déclaration 4, **est caractérisée en ce que** lors de l'étape d'information (S4), la première durée prescrite T1 est d'environ une minute.

6. La méthode selon l'une quelconque des déclarations 2 à 5, dans laquelle l'appareil de réfrigération (2) comprend en outre une unité de détection pour détecter une ouverture/fermeture de la porte (7),
le procédé étant **caractérisé en ce qu'**il comprend en outre :
- une deuxième étape (S5) consistant à déterminer si la porte (7) a été ouverte pendant une deuxième durée prescrite T2 qui commence immédiatement après l'écoulement du nombre pluriel prescrit N de cycles,
- une étape (S6) consistant à informer à nouveau l'utilisateur que le processus de production de yaourt ou de crème glacée aux fruits est terminé si le résultat de la deuxième étape de détermination (S5) est négatif et
- une étape (S7) de mise à l'arrêt du mode si le résultat de la deuxième étape de détermination (S5) est affirmatif ou si l'utilisateur a été ré-informé lors de l'étape de réinformation (S6).

7. La méthode selon la déclaration 6, **est caractérisée en ce que** dans la deuxième étape de détermination (S5), ladite deuxième durée T2 prescrite est d'environ une heure.

8. La méthode selon la déclaration 6 ou 7, **est caractérisée en ce que** dans l'étape de réinformation (S6), l'utilisateur est ré-informé pendant une troisième durée prescrite T3 que le processus de production de yaourt / crème glacée aux fruits est terminé.

9. La méthode selon la déclaration 8, **est caractérisée en ce que** dans l'étape de réinformation (S6), la troisième durée T3 prescrite est d'environ une minute.

10. Un appareil de réfrigération (2), en particulier un réfrigérateur domestique, comprenant
- un appareil de fabrication de crème glacée (1) qui comprend : un récipient (3) pour contenir la crème glacée à agiter, un agitateur (4) pour agiter la crème glacée à l'intérieur du récipient (3) et un moteur (5) pour entraîner l'agitateur (4),
- un compartiment congélateur (6) qui abrite l'appareil de fabrication de crème glacée (1),
- une porte (7) pour accéder au conteneur (4),
- une unité de contrôle pour la commande du moteur (5) et
- une interface utilisateur permettant de recevoir une entrée de l'utilisateur,
**est caractérisé en ce que**
l'unité de commande a un mode crème glacée au yaourt et/ou un mode crème glacée aux fruits, chaque mode étant sélectionnable par l'utilisateur via l'interface utilisateur, et l'unité de commande est programmée pour exécuter les étapes de la méthode telles que définies dans l'une quelconque des déclarations 1 à 9.

11. L'appareil de réfrigération (2) selon la déclaration 10, **est caractérisé en ce qu'**une unité de détection détecte une ouverture/fermeture de la porte (7).

12. L'appareil de réfrigération (2) selon la déclaration 10 ou 11, **est caractérisé en ce que** pour le mode de glace aux fruits le nombre N de cycles prescrit est 2, une durée T_cycle prescrite de chaque cycle est d'environ 45 minutes, une durée T_marche prescrite du moteur (5) et une durée T_arrêt prescrite du moteur (5) dans chaque cycle sont d'environ 40 minutes et d'environ 5 minutes respectivement et pour le mode de glace au yaourt le nombre N de cycles prescrit est 2, une durée prescrite T_cycle du premier cycle est d'environ 45 minutes, une durée prescrite T_marche du moteur (5) et une durée prescrite T_arrêt du moteur (5) au cours du premier cycle sont respectivement d'environ 40 minutes et d'environ 5 minutes, et une durée prescrite T_cycle du deuxième cycle est d'environ 15 minutes, une durée prescrite T_marche du moteur (5) et une durée prescrite T_arrêt du moteur (5) au cours du deuxième cycle sont respectivement d'environ 15 minutes et de zéro minute.

13. L'appareil de réfrigération (2) selon l'une quelconque des déclarations 10 à 12, **est caractérisé en ce que** le compartiment congélateur (6) possède un ventilateur qui est configuré pour souffler de l'air froid vers le récipient (3) de l'appareil de fabrication de crème glacée (1).

14. Un programme lisible par ordinateur comprenant des codes pour faire en sorte qu'un appareil de réfrigération (2) exécute les étapes de méthode définies dans l'une quelconque des déclarations 1 à 9.

15. Un support d'enregistrement lisible par ordinateur qui stocke le programme lisible par ordinateur tel que défini dans la déclaration 14.
